(19) Europäisches Patentamt
European Patent Office
Office européen des brevets

(11) **EP 1 329 490 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(21) Anmeldenummer: **02028378.4**

(22) Anmeldetag: **18.12.2002**

(51) Int Cl.$^7$: **C09J 7/02**, H01B 3/30, H01B 7/29, H01B 7/18, C08F 259/04, H01B 3/44, H02G 15/04

(54) **Folienklebeband mit reduziertem Halogengehalt**

Adhesive sheet with reduced halogen content

Feuille adhésive à teneur en halogène réduite

(84) Benannte Vertragsstaaten:
**DE ES FR GB IT**

(30) Priorität: **18.01.2002 DE 10202038**

(43) Veröffentlichungstag der Anmeldung:
**23.07.2003 Patentblatt 2003/30**

(73) Patentinhaber: **tesa AG**
**20253 Hamburg (DE)**

(72) Erfinder: **Müssig, Bernhard**
**21218 Seevetal (DE)**

(56) Entgegenhaltungen:
**EP-A- 1 132 927          US-A- 4 356 343**
**US-A- 4 559 382**

• **PATENT ABSTRACTS OF JAPAN vol. 2000, no. 15, 6. April 2001 (2001-04-06) & JP 2000 345121 A (YAZAKI CORP), 12. Dezember 2000 (2000-12-12)**

**Beschreibung**

Die vorliegende Erfindung betrifft ein Klebeband zum Isolieren und Wickeln von Drähten oder Kabeln mit einem Trägermaterial, das ein- oder beidseitig mit einer Klebemasse beschichtet ist, sowie die Verwendung als Isolierband beziehungsweise Band zum Umwickeln und Bündeln von Drähten und Kabeln, insbesondere in Fahrzeugen wie Automobilen.

Isolier- und Kabelwickelklebebänder bestehen üblicherweise aus weichgemachter PVC-Folie mit einer einseitigen Kleberbeschichtung.

Es besteht verstärkt der Wunsch, Nachteile dieser Produkte zu beseitigen. Diese sind Ausdampfung von Weichmacher und hoher Halogengehalt.

Die Weichmacher konventioneller Isolierklebebänder und Kabelwickelklebebänder dampfen aus, was zu einer Gesundheitsbelastung führt, insbesondere ist das üblicherweise verwendete DOP bedenklich. Weiterhin schlagen sich die Dämpfe in Kraftfahrzeugen an der Scheibe nieder, was die Sicht verschlechtert und dem Fachmann als Fogging (DIN 75201) bekannt ist. Bei noch stärkerer Verdampfung durch höhere Temperaturen, zum Beispiel im Motorraum von Fahrzeugen oder bei Isolierbändern in elektrischen Geräten, versprödet das Klebeband durch den entstehenden Weichmacherverlust.

Weichmacher verschlechtern das Brandverhalten des reinen PVCs, was durch Zugabe von Antimonverbindungen, die toxisch sehr bedenklich sind, teilweise kompensiert wird und durch Verwendung chlor- oder phosphorhaltiger Weichmacher noch etwas verbessert werden kann.

Vor dem Hintergrund der Diskussion um Verbrennung von Kunststoffabfällen, zum Beispiel Shredderabfall aus dem Fahrzeugrecycling, besteht der Trend zur Reduktion des Halogengehaltes. Daher werden bei Kabelisolierungen die Wandstärken herabgesetzt, und man versucht bei den zum Umwickeln verwendeten Klebebändern die Dicke der PVC-Folie zu reduzieren. Die übliche Dicke beträgt 100 bis 200 µm. Bei 70 bis 85 µm treten erhebliche Probleme im Kalanderprozeß auf, so daß solche Produkte kaum auf dem Markt sind.

Die üblichen Klebebänder enthalten Stabilisatoren auf Basis giftiger Schwermetalle, zumeist Blei seltener Cadmium oder Barium.

Es gibt Bemühungen, statt Weich-PVC-Folie Gewebe oder Vliese zu verwenden, die daraus resultierenden Produkte werden aber in der Praxis nur wenig eingesetzt, da sie relativ teuer sind und sich in der Handhabung (Handeinreißbarkeit) und unter Nutzungsbedingungen (Beständigkeit gegen Betriebsflüssigkeiten, elektrische Eigenschaften) stark von den gewohnten Produkten unterscheiden.

Im modernen Fahrzeugbau werden die Kabelbäume einerseits immer voluminöser und dicker durch die Vielzahl der elektrischen Verbraucher und dem vermehrten Informationstransfer innerhalb der Fahrzeuge, während andererseits der Verbauraum immer stärker eingeengt und somit die Durchführungsmöglichkeiten beim Verlegen in der Karosserie problematischer werden. Dadurch ist ein dünneres Tape was wie das erfindungsgemäße zudem noch einen geringeren Gleitreibungskoeffizienten aufweist vorteilhaft. Des weiteren wird für eine effiziente und kostengünstige Kabelbaumherstellung von den Kabelwickelbändern eine leichte und schnelle Verarbeitbarkeit erwartet.

Klebebänder auf Basis von Weich-PVC-Folien werden in Automobilen zur Bandagierung von elektrischen Leitungen zu Kabelbäumen eingesetzt. Stand in den Anfängen die Verbesserung der elektrischen Isolation bei Verwendung dieser ursprünglich als Isolierbänder entwickelten Klebebänder im Vordergrund, müssen derartige Kabelsatz-Klebebänder mittlerweile weitere Funktionen erfüllen, wie die Bündelung und dauerhafte Fixierung einer Vielzahl von Einzelkabeln zu einem stabilen Kabelstrang, den Schutz der Einzelkabel gegen mechanische, thermische und chemische Attacken.

Manuelles Ablängen von der Rolle üblicher PVC-Folienklebebänder führt leicht zu einem Überdehnen der PVC-Folie und einer verwellten Abrißkante, die eine sichere Endverklebung erschwert. Die Überdehnung kann beim Rückschrumpfen zum Ablösen des verklebten Endes führen (dem Fachmann als Flagging-Problem bekannt).

In DE 199 10 730 A1 wird ein Laminatträger beschrieben, der aus Velours oder Schaumstoff und einem Vlies besteht, welche mittels eines doppelseitigen Klebebandes oder mit einem Schmelzkleber adhäsiv verbunden sind.

EP 0 886 357 A2 beschreibt eine dreilagige Schutzummantelung aus einem Spinnfaservlies, einem PET-Gewirke sowie einem Schaumstoff- oder Filzstreifen, die zusammenkaschiert sind, wobei die Schutzummantelung zusätzlich noch sehr aufwendig mit Klebestreifen und Klettverschlußsystemen zumindest partiell versehen ist.

In EP 1 000 992 A1 wird ein gelochtes Baumwolle-Vlies mit einer 10 bis 45 µm dicken Polyethylenbeschichtung sowie einer zusätzlichen Releasebeschichtung beschrieben.

Die DE-G 94 01 037 beschreibt ein Klebeband mit einem bandförmigen, textilen Träger, der aus einem Nähvlies besteht, das seinerseits aus einer aus einer Vielzahl parallel zueinander laufender, eingenähter Nähte gebildet wird. Das hier vorgeschlagene Vlies soll bei einem Flächengewicht von 50 bis 200 g/m² eine Dicke von 150 bis 400 µm aufweisen.

Die DE 44 42 092 C1 beschreibt ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf sogenannten Kunit- beziehungsweise Multiknitvliesen. In allen drei Dokumenten werden dabei Vliese eingesetzt, die ein Flächengewicht von ungefähr 100 g/m$^2$ aufweisen, wie man den Beispielen entnehmen kann.

Aus der DE 195 23 494 C1 ist die Verwendung eines Klebebandes mit einem Träger aus Vliesmaterial einer Dicke von 400 bis 600 µm zum Bandagieren von Kabelbäumen bekannt, das einseitig mit einem Kleber beschichtet ist, auf.

Aus der DE 199 23 399 A1 ist ein Klebeband mit einem bandförmigen Träger aus Vliesmaterial bekannt, das zumindest einseitig mit einem Kleber beschichtet ist, wobei das Vlies ein Stapelfaservlies darstellt, das durch mechanische Bearbeitung verfestigt oder naßgelegt wird. Zwischen 2 % und 50 % der Fasern des Vlieses sind Schmelzfasern, und zwar solche aus Homo-, Copolymer- oder Bikomponentenfasern mit einem niedrigeren Erweichungs- oder Schmelzpunkt.

Beispielhaft erwähnt ist, daß die Schmelzfasern des Vlieses aus Polypropylen, Polyethylen, Polyamid, Polyester oder Copolymeren bestehen.

Folgende Eigenschaften sollte dabei das offenbarte Vlies haben:

- ein Vliesgewicht von 60 bis 400 g/m$^2$, insbesondere 200 g/m$^2$
- eine Vliesdicke von 100 µm bis 3000 µm, insbesondere 500 bis 1000 µm

Ein weiteres Klebeband mit einem bandförmigen Träger aus Vliesmaterial ist in der DE 199 37 446 A1 offenbart. Das Klebeband ist zumindest einseitig mit einem Kleber beschichtet, wobei das Vlies ein Stapelfaservlies darstellt, das durch mechanische Bearbeitung vorverfestigt oder naßgelegt wird. Hier erfolgt die weitere Verfestigung des Stapelfaservlieses durch Zugabe von Bindemitteln, wie zum Beispiel Pulver, Folien, Gitternetze, Bindefasern. Die Bindemittel können in Wasser oder organischen Lösemittel gelöst sein und/oder als Dispersion vorliegen.

Vorzugsweise kommen die Bindemittel als Bindedispersion wie Elastomere oder wie Duroplaste in Form von Phenol- oder Melaminharzdispersionen, als Dispersion natürlicher oder synthetischer Kautschuke oder als Dispersion von Thermoplasten wie Acrylate, Vinylacetate, Polyurethane, Styrol-Butadien-Systeme, PVC sowie deren Copolymere zum Einsatz.

Folgende Eigenschaften sollte dabei das offenbarte Vlies haben:

- ein Vliesgewicht von 50 bis 500 g/m$^2$, insbesondere 80 bis 200 g/m$^2$
- eine Vliesdicke von 100 µm bis 3000 µm, insbesondere 200 bis 1000 µm

In WO 99/24518 A1 wird ein Klebeband beschrieben, wobei das Trägermaterial ein Vlies ist, das erst durch die spezifische Auswahl von Fasern oder Filamenten mit einer Feinheit von größer 15 denier sowie durch eine zusätzlich aufextrudierte Folienschicht eine Eignung für die Verwendung von Klebebändern findet.

Es vermögen nur Vliese die dort gestellten Aufgaben zu erfüllen, die ein Flächengewicht von 34 bis 678 g/m$^2$ zeigen.

Mit der DE 197 32 958 A1 ist ein Klebeband zum Ummanteln von langgestrecktem Gut, wie Kabelsätzen oder Kunststoffprofilen, offenbart mit einem durch zwei seitliche Kanten begrenzten bandförmigen Träger, der mindestens auf einer Seite mit einer selbstklebenden Klebeschicht versehen ist, die aus einem Haftklebstoff besteht. Der Haftklebstoff weist eine derartige chemische Zusammensetzung auf, daß sich bei Vorhandensein eines leichten Anpreßdruckes auf zwei aufeinander liegende Klebeschichten unter Auflösung der Grenzflächen und vollständiger Koaleszenz der Klebeschichten eine homogene Haftklebstoff-Masse bildet.

Des weiteren umfaßt die hier dargestellte Erfindung ein Verfahren zum Ummanteln des langgestreckten Gutes. Danach wird das langgestreckte Gut in Längsrichtung im Bereich eines Abschnittes des Klebebandes auf einer mit einer selbstklebenden Klebeschicht versehenen Seite eines bandförmigen Trägers des Klebebandes positioniert und danach das Klebeband derart verklebt, daß mindestens zwei Klebebereiche des bandförmigen Trägers auf der mit der Klebeschicht versehenen Seite derart gegeneinander geklebt werden, daß unter Auflösung von Grenzflächen der Klebeschicht eine homogene Masse entsteht.

Es ergibt sich somit ein aus dem ummantelten Gut herausragendes Fähnchen, das gerade bei den eng bemessenen Platzverhältnissen im Automobilbau äußert unerwünscht ist und das Gefährdungspotential beinhaltet, daß beim Durchziehen des Kabelsatzes durch begrenzte Öffnungen oder Durchführungen zum Beispiel in der Karosserie die Ummantelung hängen bleibt und abreißt, zumindest aber die Umhüllung beschädigt. Dies gilt es zu vermeiden.

Weiterhin wird stets betont, daß nur Vliese geeignet sind, die mit einem Flächengewicht von größer 100 g/m$^2$ versehen sind.

Derartig dicke Vliese, wie sie umfassend im Stande der Technik erwähnt sind, machen die Kabelbäume noch dicker und unflexibler als klassische PVC-Tapes, auch wenn dies sich positiv auf die Schalldämmung auswirkt, was in einigen Bereichen von Kabelbäumen von Vorteil ist.

**EP 1 329 490 B1**

Aufgabe der Erfindung ist es, ein Klebeband mit einem Trägermaterial auf PVC-Basis zur Verfügung zu stellen, das das besonders einfache, preiswerte und schnelle Isolieren oder Bündeln von Drähten und Kabeln ermöglicht, so daß die Nachteile des Standes der Technik nicht oder zumindest nicht in dem Umfang auftreten, des weiteren die Vermeidung von Weichmachern und eine erhebliche Redzierung des Halogengehaltes pro m$^2$ im Klebeband, was für die thermische Verwertung von Abfällen, die solche Klebebänder enthalten, von außerordentlicher Bedeutung ist (zum Beispiel Müllverbrennung der Kunststofffraktion vom Fahrzeugrecycling).

Gelöst wird diese Aufgabe durch ein Klebeband, wie es im Hauptanspruch niedergelegt ist. Gegenstand der Unteransprüche sind dabei vorteilhafte Weiterbildungen des Klebebands sowie bevorzugte Anwendungen des erfindungsgemäßen Klebebands.

Demgemäß betrifft die Erfindung ein Klebeband zum Isolieren und Wickeln von Drähten oder Kabeln mit einem Trägermaterial, das ein- oder beidseitig mit einer Klebemasse beschichtet ist, wobei das Trägermaterial aus einer bahnförmigen, vorzugsweise verstreckten PVC-Folie mit einer Dicke von bis zu 40 µm, bevorzugt 20 bis 40 µm, besteht und im wesentlichen weichmacherfrei ist.

Im Fall einer geprägten Folie wird die Dicke vor dem Prägen zugrundegelegt.

In einer ersten vorteilhaften Ausführungsform des Klebebands weist die PVC-Folie auf

- eine Dicke von 25 bis 30 µm und/oder
- einen K-Wert von 60 bis 90, vorzugsweise 75 bis 80.

Weiter vorzugsweise ist die PVC-Folie geprägt, wobei die Tiefe der Prägung vorzugsweise 10 bis 30 µm beträgt und/oder wobei die Prägung aus einem Muster mit längs- oder querverlaufenden durchgehenden oder unterbrochenen Linien besteht.

Weiter vorzugsweise ist die PVC-Folie mit mindestens 0,7 phr einer Zinnverbindung stabilisiert.

Das erfindungsgemäße Klebeband ist im wesentlichen frei von Weichmachern und hat daher ein ausgezeichnetes Brandverhalten und geringe Emission (Weichmacherausdampfung).

Für den Fachmann überraschend und nicht vorhersehbar ist ein solches Klebeband aus einer verstreckten und weichmacherfreien PVC-Folie nutzbar. Solche Folien sind für Verpackungsanwendungen (zum Beispiel für Scheibenkäse) bekannt und weisen dort üblicherweise Dicken von 30 bis 90 µm auf. Sie werden durch Verstrecken der dickeren Primärfolie in Maschinenrichtung (md) oder vorzugsweise biaxial (KOBRA™-Prozess) auf die gewünschte Dicke hergestellt.

Für das erfindungsgemäße Klebeband ist der Bereich von 20 bis 40 µm interessant, denn der Halogengehalt des Klebebandes hängt wesentlich von der Dicke der PVC-Folie ab. Bei Einsatz so geringer Dicken wird nicht nur der bisher übliche Gehalt des Klebebands an Halogen (Chlor) drastisch reduziert, sondern auch das Gewicht, was insbesondere in Fahrzeugen von Bedeutung ist. Das Flächengewicht des erfindungsgemäßen Klebebandes liegt in der Regel unter 80 g/m$^2$ vorzugsweise unter 65 g/m$^2$.

Darüber hinaus sind die erfindungsgemäßen Klebebänder auch von den Herstellkosten attraktiver. Unter Berücksichtigung der Verarbeitbarkeit bei Herstellung und Beschichtung der Folie und der Verarbeitbarkeit des Klebebandes (Steifigkeit, Handeinreißbarkeit) liegt der optimale Dickenbereich der Trägerfolie bei 25 bis 30 µm.

Die Folie ist im wesentlichen frei von Weichmachern wie zum Beispiel DOP oder TOTM, denn weichgemachte und gleichzeitig verstreckte Folien führen zu Klebebandrollen, die nicht lagerstabil sind, sie teleskopieren, wie der Fachmann sagt. Erstaunlicherweise tritt das Teleskopieren kaum auf, wenn die verwendete verstreckte Folie weichmacherfrei ist. Überraschenderweise ist das Klebeband auch ohne Weichmacher für die Anwendung anschmiegsam genug, sofern der genannte Dickenbereich eingehalten wird. Die Kraft bei 10 % Dehnung liegt zwar deutlich höher als bei den üblichen Produkten, dieser Nachteil wird aber durch die geringe Dicke wettgemacht, da die Dicke mit der 3. Potenz in die Steifigkeit eingeht.

Weiterhin kann über Form und Tiefe einer Prägung die Anschmiegsamkeit der Folie beim Wickeln von Kabeln positiv beeinflußt werden. Auch bezüglich des Teleskopierens hat eine Prägung der Folie einen positiven Einfluß, da bei Spannungen vorrangig die zwischen Folie und Klebemasse eingeschlossene Luft ausgequetscht wird.

Als Rohstoffe für die Folie können zum Beispiel Suspension-PVC-Pulver mit einem K-Wert 60 eingesetzt werden, bei niedrigen K-Werten ist der Zusatz von Impact Modifiern (zum Beispiel auf Basis von Polyacrylatpulvern) empfehlenswert.

Aufgrund der höheren Wärmestabilität wird jedoch ein PVC mit einem hohen K-Wert bevorzugt, zum Beispiel Emulsions-PVC mit K-Wert 78. Derartige Materialien und Ihre Verarbeitung werden zum Beispiel in Handbook of PVC Formulating, Hrsg. E.J. Wickson, J. Wiley&Sons, 1993 oder PVC: Production, Properties and Uses, G. Mattews, The Institute of Materials, 1996 beschrieben.

Der K-Wert der Folie soll bevorzugt bei 60 bis 90 liegen, insbesondere 75 bis 80.

Der Zusatz von Stabilisatoren wie zum Beispiel Diphenylthioharnstoff ist erforderlich, um eine thermische Schädigung (zum Beispiel Versprödung) der PVC-Folien bei der Verarbeitung und während der Anwendung als Klebeband zu vermeiden. Derartige Stabilisatoren sind zum Beispiel in "Plastics Additives Handbook" (5. Ed.) Hanser Verlag, Kap. 3 und "Kunststoff-Handbuch - Polyvinylchlorid 2/1" (2.) Hanser Verlag Kap. 6.3 beschrieben. Insbesondere Stabilisatoren auf Basis von Zinn-Verbindungen sind für das erfindungsgemäße Klebeband geeignet, vorzugsweise solche, die für Lebensmittelverpackungsfolien zugelassen sind wie Dibutylzinn-bis-(2-ethylhexylmercaptoacetat). Die Verwendung von Blei- oder Cadmium-haltigen Stabilisatoren ist ebenfalls möglich, werden aber aus toxikologischen und Umweltaspekten weniger gern eingesetzt. Der Gehalt an Stabilisator beträgt zum Beispiel 0,3 bis 10 Gew.-Teile bezogen auf 100 Gew.-Teile PVC-Polymer, zur Erreichung hoher Wärmebeständigkeit mindestens 0,7 vorzugsweise mindestens 1 phr (Gew. Tle. auf 100 Gew.Tle. PVC) beträgt.

Weitere bei PVC-Folien übliche Additive wie Füllstoffe, Pigmente, Impactmodifier oder Gleitmittel und Verarbeitungshilfsmittel (zum Beispiel Paraloid K 120 ND, Rohm & Haas) können zur Herstellung der Trägerfolie des erfindungsgemäßen Klebebandes verwendet werden. Übliche Additive werden im "Kunststoff-Handbuch - Polyvinylchlorid 2/1" (2.) Hanser Verlag Kap. 6 beschrieben. Als bevorzugtes Gleitmittel wird Montansäureesterwachs verwendet, wobei eine Menge von 2 bis 5 Gewichtsteilen auf 100 Gew. Teile PVC-Polymer günstig ist.

Die Herstellung der Trägerfolie erfolgt bevorzugt auf einem Kalander im Hoch- oder Niedertemperaturverfahren, insbesondere mit nachgeschalteter Verstreckung. Dabei wird die Folie auf einer Rollenstrecke durch zunehmende Geschwindigkeit von Wälzen oberhalb von 95 °C um ein Vielfaches verstreckt, wobei die Dicke entsprechend abnimmt. Zusätzlich kann die Folie auch noch etwas in die Breite gezogen werden (KOBRA™-Prozess). Der Luvitherm™-Prozess ist für die erfindungsgemäßen Klebebänder besonders gut geeignet, da hier auch hohe K-Werte problemlos verarbeitet werden können. Hart-PVC kann auch im Blasprozeß zu dünnen Folien verarbeitet werden, das Verfahren ist jedoch nur für niedrigere K-Werte geeignet. Die Verfahren sind zum Beispiel bei "PVC: Production, Properties and Uses", G. Mattews, The Institute of Materials, 1996 oder "Kunststoffhandbuch", Hrsg. Hans K. Felger, Band 2 (Polyvinylchlorid), Hanser Verlag, 1986 beschrieben.

Bevorzugt wird eine Folie mit Prägung mit längs- oder querverlaufenden durchgehenden oder unterbrochenen Linien. Eine Prägung der Folie ist aus den oben genannten Gründen sinnvoll, insbesondere kann dadurch auch eine geringere Abrollkraft erreicht werden, was sich bei der üblichen Verarbeitung des Klebebandes von Hand positiv auswirkt. Die Prägetiefe, das ist die Differenz zwischen der aus dem Flächengewicht errechneten und der mit einem Dickentaster bestimmten Dicke, liegt bevorzugt im Bereich von 10 bis 30 μm (Prüfmethode siehe unten).

Das PVC-Trägermaterial wird einseitig mit einer Klebebeschichtung versehen. Bei den Haftklebern kommen alle gängigen Typen in Frage, vor allem Kleber auf Basis von Kautschuk.

Solche Kautschuke können zum Beispiel Homo- oder Copolymere des Isobutylens, des 1-Butens, des Vinylacetats, von Acrylsäureestern, des Butadiens oder des Isoprens sein. Besonderes Interesse haben Rezepturen auf Basis von Acrylsäureestern, Butadien oder Isopren.

Zur Optimierung der Eigenschaften kann die zum Einsatz kommende Selbstklebemasse (Kleber) mit einem oder mehreren Additiven wie Klebrigmachem (Harzen), Weichmachern, Füllstoffen, Pigmenten, UV-Absorbern, Lichtschutz-, Alterungsschutzmitteln, Photoinitiatoren, Vernetzungsmitteln oder Vernetzungspromotoren abgemischt sein. Klebrigmacher sind beispielsweise Kohlenwasserstoffharze (zum Beispiel aus ungesättigten C5- oder C7-Monomeren), Terpenphenolharze, Terpenharze aus Rohstoffen wie α- oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können, sowie weitere Harze (wie beispielsweise aufgeführt in Ullmanns Enzyklopädie der technischen Chemie, Band 12, Seiten 525 bis 555 (4. Aufl.), Weinheim).

Geeignete Füllstoffe und Pigmente sind beispielsweise Ruß, Titandioxid, Calciumcarbonat, Zinkcarbonat, Zinkoxid, Silicate oder Kieselsäure. Geeignete beimischbare Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone. Vernetzungsmittel sind beispielsweise Isocyanate, Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacryläure. Alterungsschutzmittel sind beispielsweise sterisch gehinderte Phenole, die zum Beispiel unter dem Handelsnamen Irganox™ bekannt sind.

Der Auftrag der Klebemasse liegt vorzugsweise bei 10 bis 40 insbesondere 18 bis 28 g/m$^2$.

Eine Vernetzung ist vorteilhaft, da die Holding Power erhöht wird und sich damit die Neigung zu Deformationen der Rollen bei Lagerung (Teleskopieren oder Bildung von Hohlstellen, auch Gaps genannt) verringert. Auch das Ausquetschen der Klebemasse wird verringert, dies drückt sich in klebfreien Seitenkanten der Rollen und klebfreien Kanten spiralig um Kabel gewickelten Klebebandes aus. Die Holding Power wird auch von der Zusammensetzung des Klebstoffs und dem Weichmachergehalt der Folie bestimmt, sie liegt vorzugsweise oberhalb von 150 min.

Die Klebkraft auf Stahl sollte im Bereich von 1,5 bis 3 N/cm und die Abrollkraft im Bereich von 3 bis 6 N/cm liegen. Gegebenenfalls kann rückseitig eine Beschichtung zur Einstellung der Abrollkraft aufgebracht werden. Vorteilhaft ist die Verwendung einer Primerschicht zwischen Trägerfolie und Klebmasse zur Verbesserung der Haftung der Klebmasse auf der Folie und somit der Vermeidung von Übertragung von Klebebandes auf die Folienrückseite während des Abwickelns der Rollen. Beschreibungen der üblicherweise für Klebebänder verwendeten Klebmassen sowie Trennlacken und Primern finden sich zum Beispiel in "Handbook of Pressure Sensitive Adhesive Technology", D. Satas, (3. Auflage).

Als Primer sind die bekannten Dispersion- und Lösungsmittelsysteme verwendbar zum Beispiel auf Basis von Isopren- oder Butadienhaltigen Kautschuk, Cyclokautschuk und insbesondere Nitrilkautschuk. Isocyanate als Additiv verbessern die Haftung und verbessern die Scherfestigkeit des Klebers nach Eindiffusion.

Ein Release-Effekt kann durch Beschichtung bekannter Releasemittel (gegebenenfalls mit anderen Polymeren abgemischt) erfolgen. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat, Polysiloxane (zum Beispiel als Copolymer mit Polyurethanen oder als Propfcopolymer auf Polyolefin), thermoplastische Fluorpolymere. Der Begriff Stearyl steht als Synonym für alle geraden oder verzweigten Alkyle oder Alkenyle mit einer C-Zahl von mindestens 10, wie zum Beispiel Octadecyl.

Zusammenfassend ist in einer weiteren bevorzugten Ausführungsform die Klebemasse eine Selbstklebemasse auf Basis von Polyisopren, Polyisobutylen und/oder Polyacrylat und optional mit einem Primer versehen. Des weiteren hat es sich als besonders vorteilhaft herausgestellt, wenn

- die Klebkraft im Bereich von 1,5 bis 3,0 N/cm und/oder
- die Abrollkraft im Bereich von 3 bis 6 N/cm liegt und/oder
- die Holding Power > 150 min beträgt.

Zur Erzielung einer guten Handeinreißbarkeit werden bei Herstellung der Klebebandrollen rauhe Schnittkanten erzeugt, die bei mikroskopischer Betrachtung Risse ausbilden, die ein Weiterreißen begünstigen. Dies ist insbesondere durch die Anwendung eines Quetschschnitts mit stumpfen oder definiert gezackten rotierenden Messern oder durch einen Abstechschnitt mit stumpfen feststehenden Klingen möglich. Aufgrund der geringe Dicke und der geringen Teleskopierneigung ist eine Lauflänge der Rollen von 33 bis 100 m problemlos möglich während konventionelle Produkte üblicherweise Längen von vergleichsweise geringen 10 bis 33 m aufweisen.

Weichgemachte PVC-Klebebänder sind nach UL 94 bei senkrechter Probe nicht selbstverlöschend, sondern weisen nur unterschiedliche hohe Brandgeschwindigkeit auf. Die erfindungsgemäßen Klebebänder sind nicht entflammbar, schwer oder zumindest innerhalb weniger Sekunden selbstverlöschend. Sie benötigen daher in der Regel keinen Zusatz von Flammschutzmitteln wie Antimonoxid.
Das Klebeband ist also vorzugsweise selbstverlöschend.

Die mechanischen Eigenschaften des erfindungsgemäßen Klebebandes liegen bevorzugt in den folgenden Bereichen:

- Reißdehnung in md (Maschinenrichtung) kleiner als 100 %.
- Reißdehnung in md ist mindestens 30 % geringer als in cd (Querrichtung)
- Reißkraft in md größer als 30 N/cm
- Kraft in md (Maschinenrichtung) bei 10 % Dehnung größer als 15 N/cm
- Schlagzugzähigkeit der Folie in cd unter 1000 kJ/m$^2$

Des weiteren weist das Klebeband in einer hervorragenden Ausgestaltung der Erfindung eine Wärmestabilität von mindestens 85°C und/oder eine Reißdehnung in md (Maschinenrichtung) kleiner als 100 % auf.

Die besonderen mechanischen Eigenschaften lassen die Besonderheiten des Klebebandes wie Weichmacherfreiheit und Verstreckung (auch die höhere in md im Vergleich zu cd) erkennen.

Das erfindungsgemäße Abdeckklebeband ist vorzugsweise farbig, insbesondere schwarz. Die Einfärbung kann in die Folie, in die Klebstoff- und/oder in die Primerschicht eingebracht oder durch Bedruckung der Folie vor, während oder nach der Kleberbeschichtung vorgenommen werden.

Die hervorragende Ausgestaltung des erfindungsgemäßen Klebebands sorgt für die Eignung desselben insbesondere zum Isolieren und Wickeln von Drähten oder Kabeln.

Des weiteren läßt sich das Klebeband ausgezeichnet zum Ummanteln von langgestrecktem Gut, wie insbesondere Kabelsätzen in Fahrzeugen, ganz besonders Automobilen, einsetzen.

**Prüfmethoden**

Die Messungen werden bei einem Prüfklima von 23 ± 1 °C und 50 ± 5 % rel. Luftfeuchte durchgeführt.

Das Zugdehnungsverhalten des Abdeckklebebandes wird an Prüflingen vom Typ 2 (nach Möglichkeit) 15 mm breiten und 150 cm langen Prüfstreifen, Einspannlänge 100 mm nach DIN EN ISO 527-3/2/300 mit einer Prüfgeschwindigkeit von 300 mm/min ermittelt.

Im Fall von Mustern mit rauhen Schnittkanten sind die Kanten mit einer scharfen Klinge vor dem Zugversuch zu besäumen.

Die Schlagzugzähigkeit des Klebebandes wird entsprechend DIN EN ISO 8256 an Proben der Abmaße (nach Möglichkeit) 15 mm Breite und 27 mm Länge bestimmt.

Bei der Schlagzugzähigkeit quer werden die Prüflinge senkrecht zur Maschinenrichtung geschnitten und der Rißverlauf erfolgt demzufolge längs zur Maschinenrichtung. Es wird jeweils das arithmetische Mittel aus 10 Messungen angegeben. Die Schlagzugzähigkeit berechnet sich gemäß DIN EN ISO 8256 nach:

$$E = E_c /(x * d) * 1000$$

mit

E    Schlagzugzähigkeit
$E_c$    Schlagarbeit
x    Probenbreite
d    Probendicke.

Die Klebkräfte werden bei einem Abzugswinkel von 180° nach AFERA 4001 an (nach Möglichkeit) 15 mm breiten Teststreifen bestimmt. Hierbei werden Stahlplatten nach AFERA-Norm als Prüfuntergrund verwendet.

Die Dicke wird nach DIN 53370 bestimmt, wobei der Taster plan (nicht gewölbt) ist. Bei strukturierten Folien wird jedoch die Dicke vor dem Prägen zugrundegelegt. Dies ist auch nachträglich über das Flächengewicht (ermittelt nach DIN 53352) und Umrechnung mit der Dichte (PVC = 1,37 g/cm$^3$) möglich. Die Prägetiefe ist die Differenz zwischen den Dicken mit und ohne Prägung.

Für die K-Wert-Bestimmung von PVC-Polymeren gilt DIN 53726/ISO 174.

Die Holding Power wird nach der PSTC 107 (10/2001) bestimmt, wobei das Gewicht 20 N beträgt und die Maße der Verklebungsfläche 20 mm in der Höhe und 13 mm in der Breite beträgt.

Die Abrollkraft wird bei 30 m/min nach DIN EN 1944 gemessen.

Das Brandverhalten wird nach UL 94 bei senkrechter Probe gemessen.

Die Wärmestabilität wird nach Ford-Spezifikation S96GG-14K024-AA nach 3000 Stunden in einem Ofen nach ASTM D 573 bestimmt.

Folgende Beispiele sollen die Erfindung erläutern, ohne deren Umfang zu beschränken:

**Beispiel 1**

Für die Herstellung des Beispiels wurde Genotherm GE 15 schwarz 35 μm von der Firma Kalle in Weert/NL verwendet. Die Folie besteht aus Suspensions-PVC, welches einen K-Wert von 60 aufweisen soll und enthält einen Zinnstabilisator, einen Impact Modifier (von Kaneka) sowie Gleitmittel und Rußpigment.

Dieser Trägerfilm wird mit einer Haftvermittlerschicht bestehend aus einer Lösung aus 1 Teilen Naturkautschuk und 1 Teil Nitrilkautschuk in Toluol mit einem Auftragsgewicht von 0,6 g/m$^2$ beschichtet und getrocknet. Die Klebmassenbeschichtung wird direkt auf die Haftvermittlerschicht mittels Kommarakel mit einem Auftragsgewicht von 25 g/m$^2$ (bezogen auf Trockensubstanz) aufgetragen.

Die Klebmasse besteht aus einer Lösung einer Naturkautschukklebemasse in Benzin mit einem Feststoffgehalt von 30 Gewichtsprozent. Diese besteht aus 50 Teilen Naturkautschuk, 10 Teilen Zinkoxid, 3 Teilen Kolophoniumharz, 6 Teilen Alkylphenolharz, 17 Teilen Terpenphenolharz, 12 Teilen Poly-β-Pinenharz, 1 Teil Antioxidant Irganox™ 1076 und 2 Teilen mineralischen Öl. Die Trocknung des Nachstriches erfolgt im Trockenkanal bei 70 °C.

Anschließend wird das Klebeband zu Stangen mit 33 m Lauflänge gewickelt. Das Schneiden erfolgt durch Abstechen der Stangen mittels feststehender Klinge (straight knife).

**Beispiel 2**

Die Ausführung erfolgt wie im Beispiel 1 mit den folgenden Modifikationen.

Als Trägerfolie wird die Folie R240 (alte Bezeichnung GA 06) von Klöckner-Pentaplast, Gendorf verwendet. Sie weist die Prägung 441 und eine Dicke vor dem Prägen von 30 μm auf und ist farblos. Diese enthält E-PVC mit K-Wert 78, ca. 0,6 Gew. % Zinnstabilisator (analytisch Mark 17 M von Crompton Vinyl Additives GmbH) und ca. 3 % Montansäureesterwachs. Die Folie wurde im Luvitherm™-Verfahren hergestellt.

Die Unterseite wird mit 1 g/m$^2$ eines Primers aus Naturkautschuk, Cyclokautschuk, Ruß und 4,4'-Diisocyanato-diphenylmethan versehen.

Der Klebstoff wird aus 40 Gew.-% Naturkautschuk SMRL, 10 Gew.-% Titandioxid, 37 Gew.-% eines C5-Kohlenwasserstoffharzes mit einem R&B-Wert von 95 °C und 1 Gew.-% Antioxidans Vulkanox™ BKF(Bayer) in einem Kneter in Hexan hergestellt. Die 20 Gew.-%ige Klebemasse wird mit einem Streichbalken die geprimerte Folienunterseite mit 23 g/m$^2$ (bezogen auf Trockensubstanz) aufgetragen und bei 115 °C getrocknet. Anschließend wird das Klebeband zu Jumbos (Großrollen) gewickelt und diese durch Quetschschnitt zu 66 m langen Rollen verarbeitet.

**Beispiel 3**

Die Ausführung erfolgt wie im Beispiel 1 mit den folgenden Modifikationen.

Die Folie ist Genotherm GE 15 farblos 25 µm von der Firma Kalle in Weert/NL und analog der Folie des Beispiels 1 aufgebaut.

Sie wurde auf der einen Seite mit einer Druckfarbe der Firma Huber bedruckt, als Bestandteile der Farbe wurden Vinylchloridvinylacetatcopolymer, Ruß und Butanon festgestellt.

Auf der anderen Seite wurde als Primer für den Kleber 1 g/m$^2$ Desmolac™4125 (Bayer) beschichtet und darauf die Rikidyne BDF 505 (Lösungsmittelacrylatlasse von Vig te Qnos) vernetzt mit 1 Gew.-% Desmodur Z 4470 MPA/X (Isocyanat von Bayer) auf 100 Gewichtsteile Klebemasse (auf Trockengehalt berechnet) mit 23 g/m$^2$ (bezogen auf Trockensubstanz) aufgetragen.

Das Schneiden erfolgt durch Abstechen von Stangen mit 33 m Lauflänge mittels rotierender Messer (round blade).

**Vergleichsbeispiel 1**

Zur Beschichtung wurde eine konventionelle Folie für Isolierband von Singapore Plastic Products Pte. unter der Bezeichnung F2104S eingesetzt. Die Folie enthält 100 phr (parts per hundred resin) Suspensions-PVC mit dem K-Wert 65, 45 phr DOP (Weichmacher), 5 phr dreibasisches Bleisulfat (TLB, Stabilisator), 20 phr Kreide (Füllstoff, gemahlener Kalk der Qualität Bukit Batu Murah Malaysia mit Fettsäure-Coating), 2 phr Ruß (Schwarzpigment) und 0,2 phr Stearinsäure (Gleitmittel). Die Nenndicke beträgt 100 µm und die Oberfläche ist glatt aber matt.

Auf der einen Seite wird der Primer Y01 von Four Pillars Enterprise/Taiwan aufgetragen (acrylatmodifizierter SBR-Kautschuk in Toluol) und darauf 23 g/m$^2$ des Klebstoffs IV9 von Four Pillars Enterprise/Taiwan (Hauptkomponenten SBR und Naturkautschuk, Terpenharz und Alkylphenolharz in Toluol). Das Schneiden erfolgt durch Abstechen von Stangen mit 33 m Lauflänge mittels rotierender Messer (round blade).

**Vergleich der Eigenschaften**

|  | Beispiel 1 | Beispiel 2 | Beispiel 3 | Vergleichsbeispiel 1 |
|---|---|---|---|---|
| Dicke der Folie [µm] | 35 | 30 | 25 | 100 |
| Dicke aus Flächengewicht [µm] | 34 | 46 | 25 | 102 |
| Reißkraft md* [N/cm] | 59 | 51 | 44 | 15 |
| Reißkraft cd* [N/cm] | 19 | 18 | 13 | 14 |
| Reißdehnung md* [%] | 65 | 75 | 70 | 150 |
| Reißdehnung cd* [%] | 190 | 230 | 150 | 160 |
| Kraft bei 10 % md* [N/cm] | 29 | 24 | 20 | 8 |

* md in Maschinenrichtung; cd quer zur Maschinenrichtung

(fortgesetzt)

|  | Beispiel 1 | Beispiel 2 | Beispiel 3 | Vergleichsbeispiel 1 |
|---|---|---|---|---|
| Handeinreißbarkeit | gut | sehr gut | sehr gut | schwer |
| Schlagzugzähigkeit cd* [kJ/m$^2$] | 250 | 100 | nicht geprüft | 1700 |
| Klebkraft Stahl        [N/cm] | 2,4 | 2,0 | 2,4 | 1,8 |
| Holding Power        [min] | 1500 | 350 | >2000 | < 1 |
| Abrollkraft 30 m/min        [N/cm] | 5.0 | 3,5 | 4,6 | 6,4 |
| Wärmestabilität 85 °C | Folie leicht versprödet | einwandfrei | einwandfrei | einwandfrei |
| Wärmestabilität 105 °C | Folie versprödet | einwandfrei | einwandfrei | Folie versprödet |
| Brandverhalten | nicht brennbar | nicht brennbar | selbstverlöschend nach 1 sec | Brennt mit stark rußender Flamme |

* md in Maschinenrichtung; cd quer zur Maschinenrichtung

## Patentansprüche

1. Klebeband zum Isolieren und Wickeln von Drähten oder Kabeln mit einem Trägermaterial, das ein- oder beidseitig mit einer Klebemasse beschichtet ist, **dadurch gekennzeichnet, daß** das Trägermaterial aus einer bahnförmigen, vorzugsweise verstreckten PVC-Folie mit einer Dicke von bis zu 40 µm, bevorzugt 20 bis 40 µm, besteht und im wesentlichen weichmacherfrei ist.

2. Klebeband nach Anspruch 1, **dadurch gekennzeichnet, daß** die PVC-Folie eine Dicke von 25 bis 30 µm und/oder einen K-Wert von 60 bis 90, vorzugsweise 75 bis 80, aufweist.

3. Klebeband nach den Ansprüchen 1 oder 2, **dadurch gekennzeichnet, daß** die PVC-Folie geprägt ist, wobei die Tiefe der Prägung vorzugsweise 10 bis 30 µm beträgt und/oder wobei die Prägung aus einem Muster mit längs- oder querverlaufenden durchgehenden oder unterbrochenen Linien besteht.

4. Klebeband nach zumindest einem der Ansprüche 1 bis 3, **dadurch gekennzeichnet, daß** die PVC-Folie mit mindestens 0,7 phr einer Zinnverbindung stabilisiert ist.

5. Klebeband nach zumindest einem der vorherigen Ansprüche, **dadurch gekennzeichnet, daß** die Klebemasse eine Selbstklebemasse auf Basis von Polyisopren, Polyisobutylen und/oder Polyacrylat ist und optional mit einem Primer versehen ist.

6. Klebeband nach zumindest einem der vorherigen Ansprüche, **dadurch gekennzeichnet, daß** die Klebkraft im Bereich von 1,5 bis 3,0 N/cm und/oder die Abrollkraft im Bereich von 3 bis 6 N/cm liegt und/oder die Holding Power > 150 min beträgt.

7. Klebeband nach zumindest einem der vorherigen Ansprüche, **dadurch gekennzeichnet, daß** das Klebeband eine rauhe Schnittkante aufweist.

8. Klebeband nach zumindest einem der vorherigen Ansprüche, **dadurch gekennzeichnet, daß** das Klebeband selbstverlöschend, gefärbt und/oder schwarz ist.

9. Klebeband nach zumindest einem der vorherigen Ansprüche, **dadurch gekennzeichnet, daß** das Klebeband eine Wärmestabilität von mindestens 85 °C und/oder eine Reißdehnung in md (Maschinenrichtung) kleiner als 100 % aufweist.

**10.** Klebeband nach zumindest einem der vorherigen Ansprüche, **dadurch gekennzeichnet, daß** die Kraft in md bei 10 % Dehnung größer als 15 N/cm ist und/oder
die Schlagzugzähigkeit unter 1000 kJ/m$^2$ liegt.

**11.** Verwendung eines Klebebands nach zumindest einem der vorherigen Ansprüche zum Isolieren und Wickeln von Drähten oder Kabeln.

**12.** Verwendung eines Klebebands nach zumindest einem der vorherigen Ansprüche zum Ummanteln von langgestrecktem Gut, wie insbesondere Kabelsätzen in Fahrzeugen, ganz besonders Automobilen.

**Claims**

**1.** Adhesive tape for insulating and winding wires or cables, having a carrier material which is coated on one or both sides with an adhesive, **characterized in that** said carrier material is composed of a preferably stretched PVC film in web form having a thickness of up to 40 μm, preferably from 20 to 40 μm, and is substantially plasticizer-free.

**2.** Tape according to Claim 1, **characterized in that** the PVC film has a thickness of from 25 to 30 μm and/or a K value of from 60 to 90, preferably from 75 to 80.

**3.** Tape according to Claim 1 or 2, **characterized in that** the PVC film is embossed, the depth of the embossing being preferably from 10 to 30 μm and/or the embossing comprising a pattern with continuous or interrupted lines extending longitudinally or transversely.

**4.** Tape according to at least one of Claims 1 to 3, **characterized in that** the PVC film is stabilized with at least 0.7 phr of a tin compound.

**5.** Tape according to at least one of the preceding claims, **characterized in that** the adhesive is a self-adhesive composition based on polyisoprene, polyisobutylene and/or polyacrylate and is optionally provided with a primer.

**6.** Tape according to at least one of the preceding claims, **characterized in that** the bond strength is in the range from 1.5 to 3.0 N/cm and/or the unwind force is in the range from 3 to 6 N/cm and/or the holding power is > 150 min.

**7.** Tape according to at least one of the preceding claims, **characterized in that** it has a rough cut edge.

**8.** Tape according to at least one of the preceding claims, **characterized in that** it is self-extinguishing, coloured and/or black.

**9.** Tape according to at least one of the preceding claims, **characterized in that** it has a heat stability of at least 85°C and/or an elongation at break in md (machine direction) of less than 100%.

**10.** Tape according to at least one of the preceding claims, **characterized in that** the force in md at 10% elongation is greater than 15 N/cm and/or the tensile impact strength is less than 1000 kJ/m$^2$.

**11.** Use of an adhesive tape according to at least one of the preceding claims for insulating and winding wires or cables.

**12.** Use of an adhesive tape according to at least one of the preceding claims for wrapping elongate material, such as cable harnesses in vehicles in particular, very particularly cars.

**Revendications**

**1.** Ruban adhésif pour l'isolement et l'enroulement autour de fils ou de câbles avec un matériau support, qui est revêtu sur l'une ou les deux faces avec une matière collante, **caractérisé en ce que** le matériau support est constitué d'une feuille de PVC en forme de ruban, de préférence étiré avec une épaisseur allant jusqu'à 40 μm, de préférence de 20 à 40 μm, et est essentiellement exempt de plastifiant.

**2.** Ruban adhésif selon la revendication 1, **caractérisé en ce que** la feuille de PVC présente une épaisseur de 25 à 30 µm et/ou une valeur K de 60 à 90, de préférence de 75 à 80.

3. Ruban adhésif selon la revendication 1 ou 2, **caractérisé en ce que** la feuille de PVC est gaufrée, l'épaisseur du gaufrage étant de préférence de 10 à 30 µm et/ou le gaufrage étant constitué d'un modèle avec des lignes continues ou discontinues longitudinales ou transversales.

4. Ruban adhésif selon au moins l'une quelconque des revendications 1 à 3, **caractérisé en ce que** la feuille de PVC est stabilisée avec au moins 0,7 phr d'un composé d'étain.

5. Ruban adhésif selon au moins l'une quelconque des revendications précédentes, **caractérisé en ce que** la matière collante est une matière autocollante à base de polyisoprène, polyisobutylène et/ou polyacétate et est munie facultativement d'un primaire.

6. Ruban adhésif selon au moins l'une quelconque des revendications précédentes, **caractérisé en ce que** la force de collage se situe dans la gamme de 1,5 à 3,0 N/cm et/ou la force de déroulement se situe dans la gamme de 3 à 6 N/cm et/ou la puissance de fixation est > 150 min.

7. Ruban adhésif selon au moins l'une quelconque des revendications précédentes, **caractérisé en ce que** le ruban adhésif présente un bord de découpe rugueux.

8. Ruban adhésif selon au moins l'une quelconque des revendications précédentes, **caractérisé en ce que** le ruban est auto-extinguible, coloré et/ou noir.

9. Ruban adhésif selon au moins l'une quelconque des revendications précédentes, **caractérisé en ce que** le ruban adhésif présente une stabilité thermique d'au moins 85° et/ou un allongement à la rupture dans la direction de la machine (md) inférieur à 100%.

10. Ruban adhésif selon au moins l'une quelconque des revendications précédentes, **caractérisé en ce que** la force dans la direction de la machine à 10% d'allongement est supérieure à 15 N/cm et/ou résilience à la traction se situe au-dessous de 1000 kJ/m$^2$.

11. Utilisation d'un ruban adhésif selon au moins l'une quelconque des revendications précédentes pour l'isolement et l'enroulement autour de fils ou de câbles.

12. Utilisation d'un ruban adhésif selon au moins l'une quelconque des revendications précédentes pour l'enrobage de produits allongés, comme en particulier des faisceaux de câbles dans des véhicules, plus particulièrement des automobiles.